# EUROPEAN PATENT APPLICATION

(11) **EP 2 211 207 A1**
(43) Date of publication of application: **28.07.2010**
(21) Application number: 09250183.2
(22) Date of filing: 23.01.2009
(51) Int. Cl.: G02B 5/128, B29D 11/00, D06Q 1/10

(54) **Retro-reflective materials and components thereof**

(71) Applicant: Reflec PLC, Winsford, Cheshire CW7 3QQ (GB)
(72) Inventor: Sagar, Brian Frederick, Cheadle, cheshire, SK8 5HY (GB); Smith, Peter, Avon, Connecticut 06001 (US)
(74) Representative: Cawley, Aimee Elizabeth

(57) **Abstract**

A printing line is provided for producing a retro-reflective material which comprises at least one first screen printing stage. The or each first stage comprises a screen with a shaped stencil, for applying a layer of adhesive to a substrate in a pattern defined by the stencil or stencils. The printing line also comprises a second screen printing stage which comprises a screen with a shaped stencil having a shape within the boundaries of, or the same as, the adhesive pattern generated by the or each first stage, for applying a layer of retro-reflective elements, for example micro-beads, to the layer of adhesive.

## Description

### TECHNICAL FIELD

The present invention relates to a retro-reflective material, to a printing line for, and a method of, making a retro-reflective material and to retroreflective elements and a method of making retro-reflective elements of such retro-reflective materials.

### BACKGROUND OF INVENTION

Pedestrians or others subject to traffic hazards can increase their visibility at night by wearing reflective clothing, especially if that clothing contains retro-reflective materials that reflect light from a car's headlights directly back to the driver. This includes, for example, people working on or besides the roadway as well as the general public when they are near a roadway. This group of individuals will benefit from protection from traffic hazards resulting from low visibility, regardless of the time of day. These hazards are intensified by the often complex and varying backgrounds found in many environments. Often, although objects are visible, they are not consciously recognized by the vehicle operator within sufficient time to take corrective action to avoid an accident.

To date the typical method by which retro-reflective materials are added to garments involves the application of retro-reflective tapes either by sewing or heat bonding lengths of tape to the garments. The shape of the tape restricts the shape and dimensions of the retro-reflective material which can be applied to a garment. Increasing the night-time visibility of pedestrians can be boosted in this way solely by increasing the stimuli confronting drivers. However, the mere fact that the retro-reflective tape worn by an individual clad in a retro-reflective garment can be detected from a far distance is no guarantee that the driver can recognize that the individual is there.

Mere detection of strips of retro-reflective tape doesn't automatically ensure recognition and so it is important to develop retro-reflective clothing that allows pedestrians to be immediately recognized as such. It is now being increasingly accepted that conventional reflective clothing can be easily misidentified. Research has shown that a motorist's perception is enhanced if he/she is able to recognize the object viewed. A motorist's anticipation and recognition of a pedestrian is best achieved through shape and motion.

The currently perceived requirements for retro-reflective night-time visibility presents compelling support for a new approach, based on whole-body, silhouette reflectivity.

Silhouette reflectivity can be achieved by constructing the garment from fabric that contains a retro-reflective coating achieved by conventional screen printing using an ink containing retro-reflective micro-beads that have been hemi-spherically coated with a reflective layer of aluminum. An example of this approach is disclosed in US Patent No. 7,175,901. However, the levels of reflectivity achievable by this approach are limited because a proportion of the beads are covered by the binder after curing and so do not retro-reflect. Furthermore, there is the limitation in the volume of beads that can be incorporated into a printing ink before its properties, such as adhesion to the substrate, washability and viscosity suitable for printing, are negatively affected. An alternative method of manufacture of retro-reflective fabric is possible through the transfer of reflective elements via the application of heat and pressure during a film lamination process. However, this process is at times uneconomic unless the unused retro-reflective elements can be re-used, as is taught in International Patent Application No. PCT/GB02/02777.

The application of glass beads, uncoated, hemispherical-coated or fully coated, to a fabric with adhesive applied has been practiced for some time. When the fabric is totally covered with the adhesive the removal of excess beads is not a major problem since those beads that come into contact with the adhesive become firmly bound and the excess beads are readily removed by gravity and/or application of a vacuum. Importantly with 100% cover the excess beads do not come into direct contact with the substrate. However, when the adhesive is applied in a pattern, leaving exposed areas of fabric, removal of excess beads is more challenging. In the case of flat and tightly woven fabrics the excess beads can be easily removed without major problems. However, for a fabric with texture or which is loosely woven, a problem arises with the excess beads becoming entrapped between the fibres, making it impossible to remove all of the excess beads during the manufacturing process. This difficulty is a particular problem with knitted fabrics.

### SUMMARY OF THE INVENTION

The present invention aims to overcome at least some of these problems by providing a printing line for producing a retro-reflective material, comprising: at least one first screen printing stage, the or each first stage comprising a screen with a shaped stencil, for applying a layer of adhesive to a substrate in a pattern defined by the stencil or stencils; and a second screen printing stage, comprising a screen with a shaped stencil having a shape within the boundaries of the adhesive pattern generated by the or each first stage, for applying a layer of retro-reflective elements to the layer of adhesive. It has been found that retro-reflective elements can be accurately applied to an adhesive coated substrate by screen printing, in any desired pattern. This solves the problem of retro-reflective elements becoming entrapped between fabric fibres, avoids wastage of retro-reflective elements and provides flexibility in the range of patterns which can be used.

For example, there may be a single first screen printing stage for applying a layer of adhesive to a substrate in a pattern defined by the stencil of the first printing stage; and a second screen printing stage comprising a screen with a second stencil having substantially the same shape as the first stencil for applying a layer of retro-reflective elements to the layer of adhesive in the pattern. In this way the adhesive and retro-reflective elements can be applied to a substrate in an accurate pattern. In order to register the deposition of the adhesive and retro-reflective elements, the printing line may additionally comprise means for aligning the patterned layer of adhesive with the stencil of the second screen printing stage.

The substrate may be a fabric. The adhesive and retro-reflective elements may be applied to the fabric as is described herein in order to generate a retro-reflective material or fabric, which for example, may be made into garments.

The screen of the or each first screen printing stage may be made of a finer mesh than the screen of the second screen printing stage. Generally, a courser mesh will be required for applying retro-reflective elements than for adhesive.

In order to regulate the flow of retro-reflective elements onto the second screen, the second screen printing stage may comprise a channel via which a free flow of retro-reflective elements are supplied to the screen of the second stage. The retro-reflective elements may comprise glass, preferably spherical, micro-beads. A mass of spherical glass micro-beads flow freely and so are well suited for screen printing.

The adhesive of the or at least one of the first stages may contain reflective metal flakes or mica, in which case the micro-beads need not be metallised. The application of such non-metallised beads on a background, formed by the adhesive containing the metal flakes or mica, results in the beads having retro-reflective properties.

Alternatively, at least some of the micro-beads may be at least partially coated with a reflective layer. The micro-beads which are at least partially coated with a metal layer will exhibit retro-reflective properties when applied to the adhesive coated substrate.

Where the retro-reflective elements comprise a plurality of glass micro-beads, at least some of which are at least hemi spherically coated with a reflective coating, the printing line may additionally comprise: a curing stage for curing the adhesive; and then a chemical removal stage for removing any reflective coating from the upper exposed portions of the micro-beads which are not embedded in the adhesive. This is particularly valuable where the substrate is a fabric as the resulting retro-reflective fabric or material will have enhanced retro-reflectivity. This is because any coating on the portion of the bead facing away from the substrate will be removed and so will not act to block the reflection of light back towards the source of the light.

The chemical removal stage may comprise a screen printing stage for applying a layer of removal chemicals, optionally in a pattern, to the upper exposed portions of the micro-beads. This enables the removal chemicals to be applied only in those locations they are required. It also avoids any damage to the substrate from any such removal chemicals, which is especially important for fabric substrates. To facilitate screen printing with the removal chemicals, the removal chemicals applied in the screen printing stage may be in a thickened or foamed state.

The screen of the second screen printing stage may be lifted higher above the level of the substrate than the screen of the or each first screen printing stage, so as to avoid contamination of the second screen with adhesive. If the second screen becomes contaminated with adhesive then this can restrict the flow of the retro-reflective elements in the second screen printing stage leading to uneven application of retro-reflective elements. In order to stop the second screen from bowing during the application of retro-reflective elements the screen of the second stage may be reinforced by a widely spaced wire mesh. Again this helps avoid contact between the adhesive and the second screen.

The printing line according may additionally comprise: a first vacuum removal stage for removing loose retro-reflective elements from the substrate before the adhesive is cured and/or a second vacuum removal stage for removing loose retro-reflective elements from the substrate after the adhesive is cured. The vacuum stages remove any loose retro-reflective elements which are not properly adhered into the adhesive layer. Any retro-reflective elements so removed can be recycled and so facilitating an efficient use of retro-reflective elements.

The adhesive in the, or in at least one of the first screen printing stages may contain colourant or coloured pigments and/or pigments exhibiting photoluminescence. This can provide a background colour which can show through a layer of retro-reflective elements applied over the adhesive, for example, where some of the elements do not have a reflective coating applied to them or where some elements are partially coated with a reflective coating and are oriented so that light can enter the element via an uncoated surface and be reflected from the coloured adhesive via an uncoated surface so that the reflected light can be transmitted back towards its source.

The pattern of the stencils may comprise an array of dots. The array of dots may itself form a shape. The dots may be arranged close together so that the array of dots formed in a shape are perceived as a single area formed in the shape, due to the halo effect of the retro-reflective elements. The array of dots can allow the substrate, for example a fabric, to be stretched predominantly in the areas of fabric between the dots and so can avoid extensive stretching of the element coated adhesive dots, which might result in the breaking away of elements from the adhesive. In addition the fabric spaces between the dots may allow the fabric to breathe.

A further screen printing stage may be provided for printing a water repellant finish in the form of a foam by screen printing the foam onto the retro-reflective material.

The present invention also provides a printing process for producing a retro-reflective material, comprising the steps of: applying at least one layer of adhesive to a substrate in at least one screen printing stage, in a pattern defined by a stencil or combined stencils of the or each first screen printing stage; and applying a layer of retro-reflective elements to the layer of adhesive using a second screen printing stage using a screen with a shaped stencil having a shape within the boundaries of the adhesive pattern generated by the or each first stage. For example, the process may comprise the steps of: applying a layer of adhesive to a substrate using a first screen printing stage in a pattern defined by the stencil of the first printing stage; and applying a layer of retro-reflective elements to the layer of adhesive in the pattern using a second screen printing stage comprising a screen with a second stencil having substantially the same shape as the first stencil. This process has the same advantages as that printing line described above.

The printing process may additionally comprise the step of aligning the patterned layer of adhesive with the stencil of the second screen printing stage and/ or the step of supplying a free flow of retro-reflective elements to the screen of the second screen printing stage.

The retro-reflective elements may comprise micro-beads, such as glass micro-beads. Wherein at least some of the micro-beads are non-metallised, the process may comprise the step of adding reflective metal flakes or mica to the adhesive of the or at least one of the first stages, i.e. so as to generate a retro-reflective effect. Alternatively, the process may comprise the step of generating retro-reflective elements by at least partially coating at least some of the micro-beads with a reflective layer, i.e. so as to generate a retro-reflective effect.

Where the retro-reflective elements comprise a plurality of glass micro-beads, at least some of which are at least hemi-spherically coated with a reflective coating, the printing process may additionally comprise the steps of: curing the adhesive; and then chemically removing any reflective coating from the upper exposed portions of the micro-beads which are not embedded in the adhesive. The step of applying the chemical removal stage may use a screen printing stage for applying a layer of removal chemicals, optionally in a pattern, to the upper exposed portions of the micro-beads. The removal chemicals may be used in the screen printing stage by generating a foam from the removal chemicals or thickening them with a suitable thickening agent before application in the screen printing stage.

The printing process may additionally comprise the step of removing loose retro-reflective elements from the substrate by vacuum removal before curing the adhesive.

The printing process may comprise the step of adding colourant or coloured pigments and/or pigments exhibiting photoluminenscence to the adhesive for the or at least one of the first screen printing stages, the step of using a pattern of the stencils comprising an array of dots and/or the step of screen printing a water repellant finish in the form of a foam onto the retro-reflective material.

The present invention also provides a printing line for producing a retro-reflective material, comprising: a first printing stage for applying a layer of a curable adhesive onto a substrate; a second stage for sprinkling a layer of retro-reflective elements onto the adhesive layer, wherein the retro-reflective elements comprise a plurality of glass micro-beads, at least some of which are at least hemi-spherically coated with a reflective coating so that a lower portion of each micro-bead is embedded in the adhesive layer and an upper portion of each micro-bead is exposed from the adhesive layer; a curing stage for curing the adhesive; and a chemical removal stage for removing any reflective coating from the upper exposed portions of the embedded micro-beads. The chemical removal of exposed portions of the coating can improve the retro-reflectivity of the resulting material and/or the transmission of the colour of the backing of the elements via the elements. The chemical removal stage may comprise a screen printing stage for applying a layer of removal chemicals, optionally in a pattern, to the upper exposed portions of the micro-beads. The removal chemicals applied in the screen printing stage may be in a thickened or foamed state. In order to enhance colour transmission through the elements from their backing, the glass micro-beads may have a metallic coating over between 65% and 95% of their surface prior to the chemical removal stage. In order to enhance retro-reflectivity, the glass micro-beads may be completely coated prior to the chemical removal stage.

The present invention also provides a printing process for producing a retro-reflective material, comprising the steps of: applying a layer of a curable adhesive onto a substrate; sprinkling a layer of retro-reflective elements onto the adhesive layer, wherein the retro-reflective elements comprise a plurality of glass micro-beads, at least some of which are at least hemi-spherically coated with a reflective coating so that a lower portion of each micro-bead is embedded in the adhesive layer and an upper portion of each micro-bead is exposed from the adhesive layer; curing the adhesive; and chemically removing any reflective coating from the upper exposed portions of the embedded micro-beads. The chemical removal step may comprise screen printing a layer of removal chemicals, optionally in a pattern, to the upper exposed portions of the micro-beads, optionally including the step of forming a foam from the removal chemicals before they are screen printed. The glass micro-beads may have a metallic coating over between 65% and 95% of their surface prior to the chemical removal step. Alternatively, the glass micro-beads may be completely coated prior to the chemical removal step.

The present invention also provides a retroreflective material comprising: a fabric backing; a layer of adhesive on the fabric backing; and a plurality of glass micro-beads partially embedded within the adhesive layer; wherein the surface of each bead which is exposed from the adhesive is an uncoated glass surface and at least some of the micro-beads have a metal coating covering less than 95%, preferably less than 75% and more preferably less than 50%, of the embedded surface of the bead. Such a material has generally good colour transmission from the fabric backing through the micro-beads. The exposed surface of each bead preferably may be substantially hemispherical.

The present invention further provides a method of making retro-reflecting elements comprising the steps of: providing a plurality of substantially spherical glass micro-beads having an average diameter, d; applying a layer of adhesive to a sheet of carrier material, which layer has a thickness of between 4% and 30% of the average diameter, d; sprinkling the micro-beads over the adhesive layer at a substantially uniform density of between 75 and 90% of the surface area; and applying a reflective metal coating to the exposed surface of each micro-bead. Such a bead can be used in a printing line or a printing process of the type described above and can be advantageous in balancing good retro-reflectivity with good colour transmission. The metal may be aluminum. The step of applying the metal coating may use vacuum metallisation.

The present invention also provides a retro-reflective element made in accordance with this method. In other words, the present invention also provides a retro-reflective element obtainable by this method. The present invention also provides a retro-reflective element comprising a spherical glass micro-bead coated over between 65% and 95% of its surface with a reflective coating.

The present invention also provides a method of full sphere coating glass micro-beads with a reflective metal coating, comprising the steps of: providing a plurality of glass micro-beads; applying a layer of a first adhesive to a sheet of carrier material; sprinkling the micro-beads over the adhesive layer; applying a reflective metal coating to the exposed surface of each micro-bead; applying a layer of a second adhesive over the metal coating micro-beads, which second adhesive is stronger than the first; delaminating the micro-beads from the first adhesive and carrier layer so as to expose the uncoated sides of the micro-beads; and then applying a reflective metal coating to the exposed surface of each micro-bead. Again the metal may be aluminum. The steps of applying the metal coating may use vacuum metallisation. The present invention also provides a retro-reflective element, i.e. a full coated retro-reflective element, made in accordance with this method. In other words, the present invention also provides a retro-reflective element, i.e. a full coated retro-reflective element, obtainable by this method.

The present invention further provides a printing line comprising a screen printing stage for printing a thickened water repellant liquid onto a retro-reflective material by screen printing the liquid onto the retro-reflective material. A process is also provided comprising the step of screen printing a thickened water repellant finish onto a retro-reflective material. The water repellant liquid may be in the form of a foam.

The present invention further provides a retro-reflective material, for example in which the substrate is a fabric, made according to any one of printing processes set out above. In other words, the present invention further provides a retro-reflective material, for example in which the substrate is a fabric, obtainable by any one of printing processes set out above.

### BRIEF DESCRIPTION OF THE DRAWINGS

The invention will now be described by way of example only and with reference to the accompanying schematic drawings, wherein:
Figure 1 shows a printing line for producing a retro-reflective fabric with patterned areas of retro-reflectivity on a roll of fabric;
Figure 2A shows a plan view of a screen of the adhesive screen printing stage of Figures 1 and 3;
Figure 2B shows a plan view of a screen of the retro-reflective elements screen printing stage of Figures 1 and 3;
Figure 3 shows a printing line for producing a retro-reflective fabric with patterned areas of retro-reflectivity on discrete cut panels of fabric;
Figure 4 shows a transverse cross-section through a portion of the retro-reflective fabric generated by the printing lines of Figures 1 and 3;
Figure 5A shows a transverse cross-section through a backing carrier material with metallised beads adhered thereto for illustrating a method of metallising micro-beads over between 65% and 95% of their surface;
Figure 5B shows a cross-section through a metallised micro-bead made according to the method illustrated in Figure 5A;
Figure 6 shows a transverse cross-section through a portion of the retro-reflective fabric similar to that of Figure 4, but with the metal covering exposed areas of the micro-beads removed;
Figure 7 shows a transverse cross-section through a backing carrier material with metallised beads adhered thereto for illustrating a method of metallising micro-beads over 100% of their surface;
Figure 8 shows a transverse cross-section of the micro-beads shown in Figure 7, with a backing carrier material applied to the metallised surfaces of the beads of Figure 7 and the backing of Figure 7 removed, for illustrating a method of metallising micro-beads over 100% of their surface;
Figure 9 shows a plan view of a retro-reflective material made in accordance with the manufacturing methods described herein;
Figure 10 is a plan view of an enlarged portion of Figure 9; and
Figure 11 shows the application of chemicals for removing an exposed metallised bead coating, via a screen printing process.

### DETAILED DESCRIPTION

Manufacturing processes and printing apparatus are described herein that allow retro-reflective fabric and the resulting manufactured garments to be produced that offer good levels of reflectivity throughout the whole body of the garment in any pattern desired. Using the processes and apparatuses described herein it is possible to generate highly retro-reflective areas on a fabric which areas are also perceived as being brightly coloured

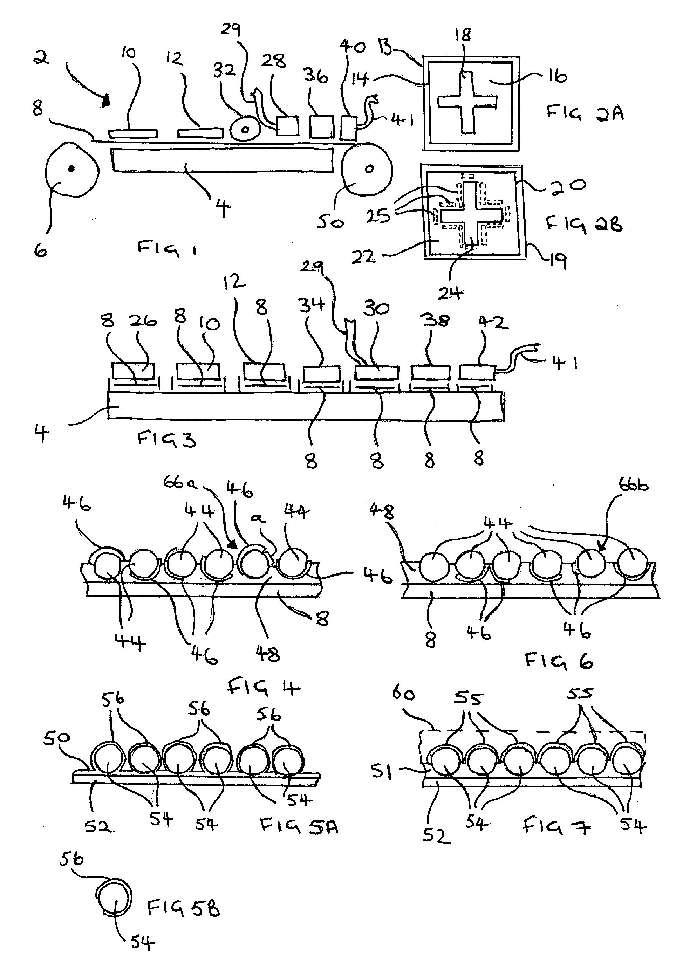

Figure 1 shows a printing line (2) comprising a base (4) over which passes a length of fabric (8) to be printed, which fabric is wound off a first fabric roll (6). At the end of the printing line, the resulting retro-reflective fabric is wound onto a second fabric roll (50). The printing line (2) comprises a first screen printing stage (10) which is used to apply an adhesive to the upper surface of the fabric, which adhesive is printed in a pattern. After the adhesive is applied to the fabric (8), the fabric passes to a second screen printing stage (12) which is used to apply retro-reflective elements directly onto the adhesive in the same pattern.

Figure 2A shows the screen (14) of the adhesive screen printing stage (10). The screen (14) is made of a finely woven fabric, stretched over a frame (13) and areas of the screen are blocked off with a non-permeable material (16) to form a stencil in the shape of a cross. The areas (18) of the screen not-blocked off form the area over which the adhesive will be printed onto the fabric (8) and in this example, a layer of adhesive will be printed onto the fabric in the shape of a cross.

The viscosity of the adhesive can be an issue and so the screen printing stage (10) is preferably a flat bed screen printing stage due to the additional pressure that can be applied. Alternatively, the screen printing stage may comprise a rotary screen printing stage.

Figure 2B shows the screen (20) of the retro-reflective element screen printing stage (12). The screen (20) is made of a mesh, stretched over a frame (19) and again areas of the screen are blocked off with a non-permeable material (22) to form a stencil in same shape as the screen (16) of the adhesive printing stage, i.e. a cross. The areas of the screen which are not-blocked off form the area (24) over which the retro-reflective elements will be deposited onto the fabric (8).

The printing line of Figure 1 is arranged so that when an adhesive printed in a pattern, for example the cross of Figure 2A, lies directly below and aligned with the screen (20) of the retro-reflective element printing stage (12) a layer of retro-reflective elements will be deposited only onto the area of the fabric (8) previously printed with adhesive, in the shape of a cross. Where the retro-reflective elements are glass micro-beads the mass of beads behaves as a fluidized mass and so the micro-beads are well suited to application by screen-printing techniques.

The screen (20) for the retro-reflective elements is stenciled with exactly the same pattern as the adhesive screen (14). However, the screen (20) of the retro-reflective element printing stage (12) is raised a few millimeters from the surface of the adhesive coated fabric. The screen (20) positioned in this way is used to apply dry free flowing retro-reflective elements, such as micro-beads, onto the adhesive only and so avoids excess beads from being applied.

The height by which the screen (20) is raised above the adhesive coated fabric is dependent on the amount of bowing in the screen. For larger screens there is a tendency for the screen to bow in the centre. Consequently, the screen (20) should be made from a stiff material, or a screen of restricted area may be used to reduce bowing. Alternatively, the screen (20) can be reinforced through the addition of a second screen, for example, manufactured from metal and with large open mesh design. In addition, holding the screen under high tension will reduce the tendency for bowing.

Alternatively, spacer elements (25), shown in dotted lines in Figure 2B, such as one side pressure sensitive foam, can be applied to the underside of the screen to ensure that the screen is the required height above the adhesive coated fabric. The spacer elements (25) are located in the blocked area (16) so as not to interfere with the flow of beads. Also, the spacer elements (25) are located around the edges of the blocked area (16) so as to provide support for the screen where it is most required. In addition the spacers (25) are positioned so that they do not come into contact with any tacky adhesive printed on the fabric (8) at an earlier printing stage. These spacer elements (25) support the screen (20) when pressure is applied to it.

The screen (20) should not be so high above the level of the adhesive coated fabric that the beads scatter beyond the adhesive pattern during printing. However, the overriding consideration is that the screen (20) should not be allowed to touch the adhesive that has been printed by screen (14) so as to avoid any adhesive transferring to the screen (20) and preventing free flowing of the retro-reflective elements through the screen (20).

It is important that the mesh size of the screen (20) is carefully chosen to restrict the retro-reflective elements from pouring through the mesh in such a way as to spread an excess of beads over the adhesive. Where the retro-reflective elements are spherical micro-beads, as a general rule the width of the generally square holes in the mesh should be between 1.5 and 3 times the diameter of the micro-beads, preferably between 1.8 and 2.2 times and more preferably approximately 2 times the diameter of the micro-beads. It has been found that 73T or 77T screens are suitable when printing 60 micron diameter micro-beads.

The fabric (8) may be in a roll to roll process, as is shown in Figure 1 or may alternatively be in the form of already cut panels of fabric, as is shown in Figure 3. In both cases, the fabric (8) is laid down on the upper surface of the base (4). In the cut panel embodiment of Figure 3, to ensure that the fabric (8) is held in place during each screen printing process, ready cut panels of fabric may be applied to a pre-tackified surface, at each stage, as is common practice in the screen printing of garments and fabric. In the roll to roll process of Figure 1 the fabric (8) can be held in place through the application of tension or a vacuum.

The adhesive may be silicone based and may be diluted with a solvent such as white spirits. The adhesive is applied to the fabric (8) by a screen printing process using the screen printing stage (10) with the desired pattern and thickness. Where the retro-reflective elements are spherical glass micro-beads, the thickness of the adhesive layer applied to the fabric (8) preferably approximates to half the diameter of the micro-beads, so as to maximize levels of retro-reflectivity and maximize adhesion properties.

In the embodiment of Figure 3 ready cut panels of fabric (8) are passed sequentially from left to right along the printing stages (26, 10, 12). Where the adhesive is not able to adhere well to both the fabric (8) and the retro-reflective elements, an additional screen printing stage (26) can be used. The additional stage (26) has a screen carrying the same stencil as the screens (16, 20) of Figures 2A and 2B and is used to print an initial tie layer adhesive to the fabric. The tie layer is printed and cured *in situ* at the printing stage (26) and is formed of a composition which adheres well to the fabric (8) and to the main adhesive so as to promote adhesion between the fabric (8) and the main adhesive. The fabric (8) is then transferred to the adhesive printing stage (10) and the main adhesive is printed in registration over the area printed with the tie layer.

It is possible to make the tie layer applied at the printing stage (26) multifunctional by adding colour to the tie layer adhesive. This can be done by adding an aluminum flake to the composition of the tie layer adhesive so as to produce a silver colour. Also, colour pigments can be added to the adhesive of the tie layer, as required. Generating a coloured tie layer has the advantage of hiding any gaps caused subsequently by the displacement of the retro-reflective elements. The tie layer may also be formed from a material which is resilient when cured, so as to allow the printed bead pattern to be elastically stretched without any breaks (grinning) in its appearance. The stretchiness of the retro-reflective material generated according to the present invention can also be improved by using particular stencil designs for the screen printing stages (26, 10, 12), for example, a pattern of small separate dots.

After the retro-reflective elements are applied at the printing stage (10, 12) the elements may be pressed into the printed adhesive. In the Figure 1 embodiment, a roller system (32) may be used to press the elements into the adhesive and in the Figure 3 embodiment a press stage (34) may be used to apply a pressing surface to the elements so as to press them into the adhesive. The pressing of the retro-reflective elements into the adhesive ensures that the elements are entrapped in the viscous adhesive until curing takes place. In the examples of Figures 1 and 3 any excess beads are removed via a vacuum system (28, 30) prior to curing of the adhesive. These recovered beads can be re-used after they are cleaned to remove adhesive.

The adhesive is then heat cured and the examples shown in Figures 1 and 3 each include a heat curing stage in which a radiant oven (36, 38) is used to heat cure the adhesive. Alternatively, a convection oven may be used to cure the adhesive.

After the curing stage, any residual unattached retro-reflective elements are removed using a further vacuum stage (40, 42) in the embodiments of Figures 1 and 3. Any elements collected at the further vacuum stage (40, 42) can be reused.

The vacuum stages may comprise vacuum nozzles or slots (28, 30, 40, 42) opening towards the bead coated fabric. Each of the nozzles communicates with an associated vacuum tube (29, 41). The ends of the vacuum tubes remote from the vacuum nozzles communicate with an area of reduced air pressure, so as to pull air into the vacuum nozzles (28, 30, 40, 42) and then along the vacuum tubes. The flow of air into the vacuum nozzles (28, 30, 40, 42) entrains within it any loose beads. The shape of the entrances to vacuum nozzles, which entrances face the bead coated fabric (8) may be the same as the shape of the stencil in the preceding retro-reflective element printing stage (12). Alternatively, the entrance to the vacuum nozzles (28, 30, 40, 42) can be covered with a screen, similar to the screen (20) used in the preceding retro-reflective element printing stage (12).

The retro-reflective elements may be glass beads, which may be spherical and which may be uncoated or partially or fully coated with a reflective material, referred to herein as micro-beads.

Typically, the glass beads to which a reflective coating is applied will have a refractive index of 1.90-1.94 and a diameter ranging from 10-120 micron. The preferred diameter is 30-90 micron, more preferably around 50-60 micron. The retro-reflective properties of the spherical glass beads are greatly enhanced by the addition of a mirror-like back surface. This is typically achieved by hemi-spherically coating the beads with a highly reflective material. Such materials are most commonly applied through a deposition technique such as vacuum metallising. Metals such as aluminum or silver provide good reflective properties. Free flowing hemi-spherically coated beads can be manufactured in a number of ways, as is known in the art.

A way of metallising glass beads so as to generate hemi-spherically coated beads is disclosed in US Patent No. 7,175,901. In the process described in US 7,175,901, a carrier sheet material (52), which may be supplied on a roll, is coated with a thin layer of adhesive (51). Glass micro-beads (54) are then sprinkled and pressed onto the adhesive layer (51). The thickness of the adhesive layer is precisely limited to ensure that it is 50% of the diameter of the micro-bead and so substantially half of each micro-bead is embedded within the adhesive layer. The beaded carrier material is then passed through a vacuum metalliser and the upper exposed hemisphere of each bead is coated with a thin layer of metal (55) so as to generate an array of coated beads as is shown in Figure 7. The hemi-spherically coated micro-beads are then released from the carrier material so as to generate a plurality of separate hemi-spherically metallised micro-beads. Details of this metallising process are set out in US 7,175,901. The metals used in this metallising process are metals with good reflective properties and may for example include aluminum or silver.

It is possible to generate micro-beads in which the majority, but not all, of the surface of each micro-bead is metallised. As shown in Figure 5A, in order to achieve this, a layer of adhesive (50) applied to a carrier material (52) with a thickness of between 4% and 30% of the diameter of the substantially spherical micro-beads (54). In order to sufficiently bond the beads (54) to the carrier material (52) the adhesive composition must provide sufficient bond strength due to compensate for the reduction in the contact area between each bead (54) and the adhesive (50). By using such a thin layer of adhesive up to 80% of the surface area of each micro-bead is exposed. It is possible to control the packing density with which the glass micro-beads (54) are applied to the carrier material (52) by applying the beads to a wet adhesive in a way that beads are not forced in to the adhesive. As the individual beads come in contact with the adhesive they find their home and because of the random nature of this process the packing is inefficient and as such there is a gap between adjacent beads. Then in the vacuum metallization process the vaporized metal penetrates the gaps between the micro-beads (54), bending around the convex sides of the beads so as to coat the entire exposed surface of each micro-bead (54). In this way between 65% and 95% of the surface of the spherical glass micro-bead (54) can be covered with a metal coating (56). The resulting reflective coated micro-bead (54) is shown in Figure 5B.

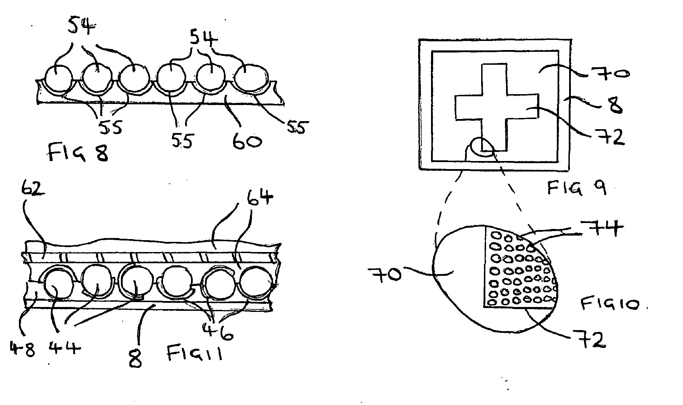

A cost effective process for 100% bead metallization is also provided for completely coating the surface of a spherical glass micro-bead with a reflective coating. The first part of the process, described above, is followed to generate an array of beads (54) embedded within a first adhesive (51) applied to a carrier material (52) with the exposed surfaces of the micro-beads coated with a hemi-spherical reflective coating (55) and the remainder of the surface of the micro-beads uncoated and embedded within the first adhesive, as is shown in Figure 7. The metallised beads on the carrier are then coated with a second adhesive (60), as shown in Figure 8 and by dotted lines in Figure 7. The second adhesive (60) is a pressure sensitive adhesive that has a greater adhesive strength than the first adhesive (51) and the beads are delaminated from the first adhesive layer (50). The resulting array of beads is shown in Figure 8, with the coated portion of each micro-bead (54) embedded within the second adhesive (60) and the remainder of each micro-bead exposed. The array of beads shown in Figure 8 is then passed through the metallising process in order to coat the exposed, non-metallised, surfaces of the beads (54) so that each bead (54) is completely coated by a reflective coating layer. The beads are then recovered from the second adhesive layer (60).

In the making of retro-reflective materials a mixture of coated micro-beads and uncoated micro-beads may be applied to an adhesive coated fabric (8). The uncoated micro-beads do not contribute, other than a minimal amount, to the retro-reflectivity of the resulting retro-reflective material. However, they have the advantage of allowing the colour of the underlying fabric, or the colour of the adhesive onto which they are applied to show through. This enables patterns of different coloured areas to be perceived when the retro-reflectively coated side of such a material is viewed. It is preferred that the uncoated micro-beads used in such a fabric are made of a glass with a lower refractive index than is used in the glass of the beads which are coated. The uncoated beads may have a refractive index in the range of 1.3 to 1.75. Such micro-beads are generally cheaper than those with a higher refractive index and so the overall material costs of such a retro-reflective material can be reduced without prejudicing the quality of the material.

A cross-section through a sample of a retro-reflective material made using the processes described above in relation to Figures 1 to 3, is shown in Figure 4. In the material of Figure 4, the retro-reflective elements comprise spherical glass micro-beads (44) hemi-spherically coated with a reflective coating (46). The beads (44) have their lower halves embedded within a layer of cured adhesive (48) printed onto a fabric substrate (8). For optimum retro-reflectivity, the reflective coating (46) is facing substantially downwardly towards the surface of the fabric (8), i.e. the coated side of the bead is embedded within the adhesive and the uncoated side of the bead is exposed from the adhesive, as is shown for the right hand bead (44) of Figure 4. However, the micro-beads (44), as is shown in Figure 4, will be randomly oriented when they are applied to the adhesive via the printing stage (12) and so a significant proportion of the beads will have their coated surface (46) at least partially exposed, for example the left hand bead (44) of Figure 4. The beads (44) with the majority of their coating (46) exposed do not retro-reflect light and instead they impart a relatively dark grey appearance to the printed areas of fabric. It is possible to improve the retro-reflective properties of the printed areas and reduce their darkness by removing any coating (46) that is exposed above the surface of the adhesive layer (48).

The removal of the exposed coatings can be achieved through the application of suitable alkali or acid chemicals. By way of an example immersion in a 4% concentration of an aqueous solution of sodium hydroxide at ambient temperature for several minutes can be used to attack the material of the metallic coating, for example aluminum, on the exposed surface of the bead.

Alternatively, a screen printing stage of the type described above, and as is shown in Figure 11 can be used to remove the exposed coatings. This is done by registering the screen (62) of the screen printing stage with the area printed with hemispherically coated micro-beads (44, 46) to apply the chemicals (64) needed to remove the exposed coating (46) (for example 4% aqueous sodium hydroxide), in a thickened form, either as a gel or foam, directly onto the beads (44, 46) themselves and not onto the background substrate, for example fabric (8). This allows the use of chemicals of a more aggressive nature that might damage the fabric (8) if they came in contact with one another. The chemicals must be removed by rinsing in water shortly after their application to avoid any undesirable attack of the metal underneath the beads embedded in the adhesive. The resulting retro-reflective fabric, with the exposed portions of the coating (46) of each bead (44) removed is shown in Figure 6.

When the material of Figure 6 is compared to the material of Figure 4, it can be seen that the material of Figure 6 in which the exposed areas of the metal coating (46) are removed has two important advantages. Firstly, the material of Figure 6 has better retro-reflective properties because the exposed portions of the beads (44) are not blocked from transmitting reflected light. Secondly, the material of Figure 6 better exposes the colour of the adhesive (48) and/or fabric (8). For example, considering the micro-bead (66a) in Figure 4, the colour of the adhesive (48) and/or fabric (8) can be transmitted only over the small surface area (a) of exposed glass bead. The equivalent micro-bead (66b) of Figure 6, with the exposed metal coating removed can transmit the background colour over a much larger area of its surface.

In order to generate a contrasting pattern on a retro-reflective material made, for example, according to the process of Figures 1 or 3, it is possible to apply the chemicals for removing the metal coating, via a screen printing process, as described above in relation to Figure 11, but only over a selected portion or selected portions of the areas of the material printed with retro-reflected elements. The selected portion or portions will be defined by the stencil for the screen (62) used in the screen printing process for removing exposed metal coatings. The selected portions will look like Figure 6 and so the background colour of the adhesive (48) and/or fabric (8) will show through more strongly than the remaining portions, which will look like Figure 4 and so will be perceived as more grey in colour.

Heat and/or moisture can be used to accelerate the metal removal process and the residual chemicals and thickening agent are then removed by a washing process.

A fabric with improved retro-reflectivity is generated where the retro-reflective elements used in the printing stage (12) of the printing lines of Figures 1 and 3 are glass micro-beads coated with more than 50% and up to 100% of their surface of a reflective coating in the process described in relation to Figure 4 and then the exposed portions of the coating are removed as described above in relation to Figure 6. This is because, as compared to hemi-spherically coated beads the up to 100% surface coated beads will on average have a larger coated area embedded in the adhesive (48). This means, where up to 100% surface coated beads are used, there will be on average a larger area of reflective coating behind each bead and so retro-reflectivity will be improved.

This technique to remove exposed areas of coating (46) can also be used with beads (44) that have been metallised over 100% of their surface, e.g. by vacuum metallising, for example with aluminum or silver, while agitating the beads or by applying a chemical silvering solution. The removal of the metal coating on the exposed hemisphere of the beads leads to a layer of perfectly aligned hemi-spherically-coated beads embedded in the printed adhesive pattern, giving much enhanced levels of retro-reflectivity.

In an alternative embodiment, reflective particles such as aluminum flake (supplied by Silberline), mica or silica flake can be added to the adhesive (48), so as to provide a reflective background to non-metallised, plain beads, embedded therein.

By using a screen design matching that used to apply the adhesive and by careful positioning, as is generally used in the art of screen printing, it is possible to apply the beads only where the adhesive has been applied and hence control and minimize the amount of beads applied. Also the screen will act like a sieve and block any contaminated beads from being applied to the fabric. Avoiding too much bead loss also keeps down costs. The importance of applying the beads precisely over the adhesive is particularly relevant for open mesh materials such as knitted fabrics. If the glass micro-beads are indiscriminately applied overall to the fabric containing the printed adhesive a significant proportion of the beads may become entrapped within and between the yarns.

Unlike conventional screen printing of reflective inks larger diameter glass beads can be applied. The spherical glass beads may be part or fully covered with a reflective coating such as aluminum. It is possible to apply clear spherical beads to an adhesive that contains a reflective particle and create a retro-reflective fabric. In the case of mica a coloured reflective material can be created.

A suitable adhesive may be chosen that is cured simply by storing the printed and bead coated material under ambient conditions for several hours. Alternatively the adhesive may be cured with heat, for example at heat curing stages (36, 38). It is possible to use a mobile oven to move down the printing lines of Figures 1 and 3. An oven equipped with radiant heat is preferable to one with circulating hot air in order to avoid blowing off the beads before they are permanently attached after the adhesive has been cured.

In the case of a continuous roll of fabric to which the process shown in Figure 1 is applied, it can be wound up in a roll (50) and if needed sent for any further treatments such as the application of a DWR (durable water repellent) finish such as polytetrafluoroethylene (PTFE), marketed under the registered trademark of Teflon®

In the case of garment panels that have been printed with the reflective material, as is shown in Figure 3, it may be necessary to add a finish to impart water resistant properties. This is particularly the case for fabrics used in allweather, outerwear clothing such as for jackets and trousers. Typically, such products are made from woven fabrics. It is difficult to get sufficient adhesion of retro-reflective elements to fabric that has been pretreated with a water-repellent finish but it is possible to screen print a water repellant finish onto the garment panel after applying the retro-reflective elements so as to impart the necessary properties. However, the water repellent agent, typically PTFE or silicone, must be of a sufficient viscosity so as to allow it to be screen printed. It has been found that by putting such liquid into a foamed state using standard foaming equipment prevents the liquid from draining through the screen under gravity and as such the water repellent chemicals can be easily applied. In the case of cut panels the fabric would be ready to be sewn into a garment.

Multi coloured patterns can be applied through the benefits of placement screen printing by including in the printing line additional screens to print patterned areas of colour.

With reference to Figure 3, a retro-reflective material square of the type shown in Figures 9 and 10 can be made. In this embodiment the additional stage (26) has an open screen with no stencil and is used to print an initial coloured tie layer adhesive (70) over the surface of a square of fabric (8). For example, the tie adhesive may have a suitable pigment added to it so as to generate a fluorescent yellow coloured tie layer adhesive. The fabric (8) is then transferred to the adhesive printing stage (10) of Figure 3 and the main adhesive is printed in the centre of the area printed with the tie layer (70). The main adhesive layer may also have coloured pigment, for example fluorescent white pigment, added to it. The screen of the adhesive printing stage is modified from that of Figure 2A so that the stencil exposes an array of circular areas of screen, which array is configured into the shape of a cross. Thus, the printing stage (10) prints a layer of fluorescent white adhesive dots onto the tie layer (70) in an array. At the retro-reflective element printing stage (12) a screen identical to that used at the adhesive printing stage (10) is used in register with the array of adhesive dots. Thus, retro-reflective elements are applied exclusively to the array of adhesive dots so as to form a retro-reflective coating (72) in the shape of a cross and made up of an array of retro-reflectively coated adhesive dots (74), as shown in Figure 10. The resulting square of retro-reflective material has a background of fluorescent yellow on which a combined fluorescent white/silvery retro-reflective cross can be seen. More of the fluorescent white may be exposed by removing the exposed areas of metal coating from the retro-reflective elements.

Applying the adhesive in an array of separate dot-shaped areas to break up the pattern of adhesive before applying the beads to the dot-shaped areas creates the appearance of a continuous print but one which is water vapour permeable (breathable) and with enhanced flexibility since the beads are applied to a series of discrete islands. Light reflected from such a print will appear as a continuous pattern due to the halo effect.

A limitation of retro-reflective materials is the silvery look that is created when viewed under ambient lighting conditions, for example, when using full sphere coated beads with the exposed coating removed. This effect can be mitigated by blending the metallised beads with plain beads, albeit this results in a trade-off in the level of reflectivity. Enhanced coloured effects are obtained with coloured adhesives when a blend of metallised and plain beads is used. When hemi-spherical coated beads are used brighter colours are also obtained if the exposed coating on the randomly oriented beads is chemically removed after curing, as is described above. The coloured adhesives have pigments or dyes added to them.

Clear beads may be applied to adhesive containing coloured mica, using a screen printing process similar to that described in Figures 1 to 3 which creates a coloured print that also reflects colour.

A fabric fully or almost fully coated with a blend of reflective and plain beads on adhesive containing colour has application in Chromakeying. The fabric can be used with a coloured light fitted around the camera lens, whereby the camera will see the retro-reflected colour of the light emitted from the light fitting and not the colour of the fabric. Alternatively, the same fabric can be used as a background for chromakeying without the use of the lighting device around the lens of the camera. It has been found that the colours green and blue work best in a chromakeying application. Hence with this invention it is possible to create a fabric which is, say, coloured green (working well as a standard chromakey fabric) but when used with a device around the camera lens emitting blue light the camera will see blue colour.

## Claims

1. A printing line for producing a retro-reflective material, comprising:
at least one first screen printing stage, the or each first stage comprising a screen with a shaped stencil, for applying a layer of adhesive to a substrate in a pattern defined by the stencil or stencils;
and
a second screen printing stage, comprising a screen with a shaped stencil having a shape within the boundaries of the adhesive pattern generated by the or each first stage, for applying a layer of retro-reflective elements to the layer of adhesive.

2. A printing line according to claim 1, comprising:
a single first screen printing stage for applying a layer of adhesive to a substrate in a pattern defined by the stencil of the first printing stage;
and
a second screen printing stage comprising a screen with a second stencil having substantially the same shape as the first stencil for applying a layer of retro-reflective elements to the layer of adhesive in the pattern.

3. A printing line according to claim 1 or 2 wherein the screen of the or each first screen printing stage is made of a finer mesh than the screen of the second screen printing stage.

4. A printing line according to any of claims 1 to 3 additionally comprising means for aligning the patterned layer of adhesive with the stencil of the second screen printing stage.

5. A printing line according to any of claims 1 to 4 wherein the second screen printing stage comprises a channel via which a free flow of retro-reflective elements are supplied to the screen of the second stage.

6. A printing line according to any of claims 1 to 5 wherein the retro-reflective elements comprise glass micro-beads.

7. A printing line according to claim 6 wherein the adhesive of the or at least one of the first stages contains reflective metal flakes or mica and the micro-beads are non-metallised.

8. A printing line according to claim 6 wherein at least some of the micro-beads are at least partially coated with a reflective layer.

9. A printing line according to any of claims 1 to 5 wherein the retro-reflective elements comprise a plurality of glass micro-beads, at least some of which are at least hemi spherically coated with a reflective coating and additionally comprising:
a curing stage for curing the adhesive; and then
a chemical removal stage for removing any reflective coating from the upper exposed portions of the micro-beads which are not embedded in the adhesive.

10. A printing line according to claim 9 wherein the chemical removal stage comprises a screen printing stage for applying a layer of removal chemicals, optionally in a pattern, to the upper exposed portions of the micro-beads.

11. A printing line according to claim 10 wherein the removal chemicals applied in the screen printing stage are in a thickened or foamed state.

12. A printing line according to any of claims 1 to 11 wherein the screen of the second screen printing stage is lifted higher above the level of the substrate than the screen of the or each first screen printing stage.

13. A printing line according to any of claims 1 to 12 wherein the screen of the second stage is reinforced by a widely spaced wire mesh.

14. A printing line according to any of claims 1 to 13 additionally comprising:
a first vacuum removal stage for removing loose retro-reflective elements from the substrate before the adhesive is cured.

15. A printing line according to any of claims 1 to 14 additionally comprising:
a second vacuum removal stage for removing loose retro-reflective elements from the substrate after the adhesive is cured.

16. A printing line according to any of claims 1 to 15 wherein the adhesive in the, or in at least one of the first screen printing stages contains colourant or coloured pigments and/or pigments exhibiting photoluminenscence.

17. A printing line according to any of claims 1 to 16 wherein the pattern of the stencils comprises an array of dots.

18. A printing line according to any of claims 1 to 17 additionally comprising a further screen printing stage for printing a water repellant finish in the form of a foam by screen printing the foam onto the retro-reflective material.

19. A printing process for producing a retro-reflective material, comprising the steps of:
applying at least one layer of adhesive to a substrate in at least one screen printing stage, in a pattern defined by a stencil or combined stencils of the or each first screen printing stage; and
applying a layer of retro-reflective elements to the layer of adhesive using a second screen printing stage using a screen with a shaped stencil having a shape within the boundaries of the adhesive pattern generated by the or each first stage.

20. A retroreflective material made according to the printing process of claim 19.

21. A printing line for producing a retro-reflective material, comprising:
a first printing stage for applying a layer of a curable adhesive onto a substrate;
a second stage for sprinkling a layer of retro-reflective elements onto the adhesive layer, wherein the retro-reflective elements comprise a plurality of glass micro-beads, at least some of which are at least hemi-spherically coated with a reflective coating so that a lower portion of each micro-bead is embedded in the adhesive layer and an upper portion of each micro-bead is exposed from the adhesive layer;
a curing stage for curing the adhesive; and
a chemical removal stage for removing any reflective coating from the upper exposed portions of the embedded micro-beads.

22. A printing line according to claim 21 wherein the chemical removal stage comprises a screen printing stage for applying a layer of removal chemicals, optionally in a pattern, to the upper exposed portions of the micro-beads.

23. A printing line according to claim 22 wherein the removal chemicals applied in the screen printing stage are in a thickened or foamed state.

24. A printing line according to any of claims 21 to 23 wherein the glass micro-beads have a metallic coating over between 65% and 95% of their surface prior to the chemical removal stage.

25. A printing line according to any of claims 21 to 23 wherein the glass micro-beads are completely coated prior to the chemical removal stage.

26. A printing process for producing a retro-reflective material, comprising the steps of:
applying a layer of a curable adhesive onto a substrate;
sprinkling a layer of retro-reflective elements onto the adhesive layer,
wherein the retro-reflective elements comprise a plurality of glass micro-beads, at least some of which are at least hemi-spherically coated with a reflective coating so that a lower portion of each micro-bead is embedded in the adhesive layer and an upper portion of each micro-bead is exposed from the adhesive layer; curing the adhesive; and
chemically removing any reflective coating from the upper exposed portions of the embedded micro-beads.

27. A retroreflective material made according to the printing process of claim 26.

28. A retroreflective material comprising:
a fabric backing;
a layer of adhesive on the fabric backing; and
a plurality of glass micro-beads partially embedded within the adhesive
layer;
wherein the surface of each bead which is exposed from the adhesive is an uncoated glass surface and at least some of the micro-beads have a metal coating covering less than 95%, preferably less than 75%, more preferably less than 50%, of the embedded surface of the bead.
